(19) **Europäisches Patentamt** / **European Patent Office** / **Office européen des brevets**

(11) **EP 3 076 367 A1**

(12) **EUROPEAN PATENT APPLICATION**
published in accordance with Art. 153(4) EPC

(43) Date of publication:
**05.10.2016 Bulletin 2016/40**

(51) Int Cl.:
**G06T 7/00** (2006.01)

(21) Application number: **14828690.9**

(22) Date of filing: **15.09.2014**

(86) International application number:
**PCT/CN2014/000842**

(87) International publication number:
**WO 2015/010451 (29.01.2015 Gazette 2015/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Zhejiang University**
**Hangzhou, Zhejiang 310027 (CN)**

(72) Inventor: **LU, Xiqun**
**Hangzhou**
**Zhejiang 310027 (CN)**

(74) Representative: **Patentanwälte und Rechtsanwalt Weiß, Arat & Partner mbB**
**Zeppelinstraße 4**
**78234 Engen (DE)**

Remarks:
The filing date of the international application is within two months from the date of expiration of the priority period (R. 26bis.3 PCT).

(54) **METHOD FOR ROAD DETECTION FROM ONE IMAGE**

(57)    The present invention provides an image-based road detection method. In the present invention, a road vanishing point is detected according to the characteristic that straight lines with better direction consistency exist in a general road image and that pixels on a road pavement have similar color distribution. Detecting the road vanishing point is achieved by an interaction of two intersecting straight lines satisfying the above-mentioned conditions, and a region between the two intersecting straight lines will cover part of a road region in the image and sometimes will also cover part of a non-road region in the image. By using the initial division result, a Gaussian distribution model is established for the road region with respect to the characteristic that color and texture characteristic distribution in the road region are relatively concentrated, a nonparametric distribution model is established for a non-road region in the image with respect to the characteristic that color and texture characteristic distribution in the non-road region is relatively dispersive, and then a simple likelihood proportion classifier is used for correcting an initial road part which is additionally detected in a vanishing point detection process.

Fig. 1

## Description

### Field of the Invention

The present invention relates to a road detection method, and in particular, to a full automatic road detection method from a single image from bottom to top.

### Background of the Invention

An important problem in real-time road monitoring, intelligent walking robots or automatic driving vehicles and other computer vision systems is to detect forward available paths and detect barriers and the like in the roads. In the absence of any prior knowledge about the roads, road detection from a single image is an ill-conditioned problem on mathematics.

At present, most methods are used for carrying out road detection with respect to images photographed in artificial environments, such as indoor and urban street images and the like. As these images meet the "Manhattan world" assumption, namely, the directions of most straight lines in the images conform to mutually orthogonal coordinate axes in a real three-dimensional world coordinate system, clustering these lines according to different directions can help a computer to estimate the spatial structure information of a three-dimensional scene.

However, images photographed in non-artificial environments have great difference from the images photographed in artificial environments, for example, in suburbs, deserts and wilderness and other places, most straight lines detected in these images are generated by trees, vegetation, distant mountains and clouds in the sky and the like, and the directions of these straight lines do not conform to the mutually orthogonal coordinate systems in the real three-dimensional world, so that these straight lines will generate very large interference on the estimation of roads in the images.

According to the currently consulted technical literatures, a kind of existing image-based road detection technology is introduced in a paper published on an IEEE image processing journal on August 2010 (H. Kong, J.Y Audibert, and J. Ponce, "General road detection from a single image, "IEEE Trans. On Image Processing, 19 (8): 2211-2220, 2010). Such technology uses an array of spatial direction filters, such as Gabor filters, to detect the texture direction of each pixel in an image, then a voting policy is adopted, and the pixel obtaining the most votes is determined as a vanishing point of the road. On the basis of detection of the vanishing point of the road, edge straight lines on both sides of the road are estimated. Limitations of these methods lie in that the computation complexity in the voting process is high and that the methods are not suitable for real-time systems; in addition, if some objects having larger edge strength than road boundaries or vehicle tracks exist in a road scene, for example, billboards or vehicles and the like, then the voting result will have a big error, because the qualification of voting points is generally determined by the response strength of direction filters on the pixels; and in addition, the detection methods only based on straight lines are not applicable to roads with very large curvatures.

### Summary of the Invention

One aspect of the present invention provides an image-based road detection method. The method includes the following steps: inputting a road image; dividing the image into an initial road region and an initial non-road region; determining the likelihood of each pixel in the image belonging to a road region and the likelihood belonging to a non-road region; and then, comparing a ratio of the likelihood of each pixel belonging to the road region to the likelihood belonging to the non-road region with a threshold, and determining whether the pixel belongs to the road region according to a comparative result.

According to the method, by means of linear information in a general road image and in combination with the characteristic that the gradient directions of pixels on the straight line should be consistent, edge lines irrelevant to a road or a vehicle track is removed from the image. Then, these image edges are fitted by using a least square method to obtain a corresponding linear equation. According to the characteristics that a road boundary in the general road image extends from a road vanishing point towards the bottom of the image and that texture colors in the road are similar or uniform, and according to the difference of the texture colors of the pixels within a region enclosed by line segments from an intersection of each two intersecting straight lines towards the bottom of the image, and the consistency measure of the gradient directions and the linear directions of the pixels of each two intersecting straight lines, an energy function is constituted, and the intersection of intersecting straight line pairs having the minimum energy is determined as the detected road vanishing point. Since a region between two line segments of the intersecting straight line pairs having the minimum energy from the vanishing point to the bottom of the image will cover part of a road region in the image and sometimes will cover part of the non-road region in the image, by means of the initial rough road division result, since color distribution in the general road region is relatively concentrated while the color distribution in the non-road region is relatively dispersive, color distribution statistical distribution models are established for the road region and the non-road region respectively by using different statistical distribution models, and then, an initial road part which is additionally detected in a vanishing point detection process is corrected by using a simple likelihood proportion classifier.

In practical application, the method can be achieved by the following specific steps:

(1) inputting a road image;

(2) setting a length threshold $T_1$, an angle error threshold $T_2$, a number $N_1$ of image edges for linear fitting, a numerical value $T_3$ of successive reduction of the length threshold and a number $N_2$ of image edges satisfying direction consistency requirements;

(3) obtaining a gradient direction and edge points of each pixel of the road image by using an image edge detection method;

(4) removing isolated edge points and connection edge points in the image by adopting a raster scanning manner and an eight-communication method to obtain image edges;

(5) checking whether the lengths of all image edges obtained in the previous step (4) satisfy the length threshold $T_1$ preset in the step (2), if $N_1$ image edges for linear fitting and satisfying the length requirements can be collected at the current length threshold $T_1$, skipping to a next step (6), otherwise successively reducing the length threshold $T_1$ in a manner of reducing $T_3$ from the current length threshold $T_1$ at each time, until $N_1$ image edges satisfying the length requirements can be collected;

(6) for the obtained $N_1$ image edges satisfying the length requirements, calculating a measure value of gradient direction consistency of pixels on each image edge satisfying the length requirements:

$$C_i = \sum_{\mathbf{p}_k,\mathbf{p}_{k+1} \in edge\_list(i)} \left| \hat{\theta}(\mathbf{p}_k) - \hat{\theta}(\mathbf{p}_{k+1}) \right|, \qquad (1)$$

where $\mathbf{p}_k$ and $\mathbf{p}_{k+1}$ represent two adjacent pixels located on the $i$th image edge satisfying the length requirements, $\hat{\theta}(\mathbf{p}_k)$ and $\hat{\theta}(\mathbf{p}_{k+1})$ respectively represent the gradient directions of the two pixels, the symbol $|\ |$ represents figuring out an absolute value, and $C_i$ represents the measure value of the gradient direction consistency of the pixels on the $i$th image edge satisfying the length requirements, and the smaller the measure value is, the better the gradient direction consistency of the pixels on the edge is;

(7) according to the formula (1), arranging the $N_1$ image edges satisfying the length requirements according to the respective calculated measure values of the gradient direction consistency of the pixels from small to large, then selecting $N_2$ image edges with better direction consistency from small to large, namely, the measure values C of the direction consistency thereof are smaller;

(8) for each image edge satisfying the length and direction consistency requirements obtained in the step (7), assuming that the $i$th image edge satisfying the length and direction consistency requirements have $n_i$ points in total, these points form the following homogeneous coordinate matrix $\mathbf{A}^i$ :

$$\mathbf{A}^i = \begin{bmatrix} x_1^i & y_1^i & 1 \\ \vdots & \vdots & \vdots \\ x_{n_i}^i & y_{n_i}^i & 1 \end{bmatrix}, \qquad (2)$$

wherein in the formula (2), $x$ and $y$ represent space coordinates of the pixels on the $i$th image edge satisfying the length and direction consistency requirements, the superscript i represents a serial number of the image edge satisfying the length and direction consistency requirements, while a subscript represents a serial number of the pixel on the image edge, and the range is 1 to $n_i$, then decompose these obtained matrixes $\mathbf{A}^i$ by using a singular value decomposition method, the number of these matrixes is equal to the number $N_2$ of the image edges satisfying the length and direction consistency requirements, a unit singular vector corresponding to a minimum singular value of the matrix $\mathbf{A}^i$ is a parameter vector $[a_i\ b_i\ c_i]$ of a straight line fitted by the $i$th image edge satisfying the length and direction consistency requirements, the linear equation is $a_i x + b_i y + c_i = 0$, in other words, straight lines fitted by these image edges are obtained by using a least square method;

(9) calculating intersections among these straight lines according to the parameters of the obtained straight lines, assuming that the parameter vectors of the straight lines fitted by the $i$th and the $j$th image edges are respectively $[a_i\ b_i\ c_i]$ and $[a_j\ b_j\ c_j]$, obtaining the interaction of the straight lines fitted by the $i$th and the $j$th image edges via a cross product of the parameter vectors of the straight lines;

(10) for each two intersecting straight lines, checking the difference of the gradient direction and the located linear direction of each pixel on the two straight lines along the two straight lines from the intersection of the two straight lines to the lower side direction of the image:

$$COR(\mathbf{l}_i^s) = \frac{\#\left(\left|\hat{\theta}(\mathbf{p}_k) - \theta(\mathbf{l}_i)\right| < T_2, \mathbf{p}_k \in \mathbf{l}_i^s\right)}{length(\mathbf{l}_i^s)}, \quad (3)$$

where $s$ represents the intersection of a straight line $\mathbf{l}_i$ and a straight line $\mathbf{l}_j$, wherein $\mathbf{l}_i^s$ represents a segment of the straight line $\mathbf{l}_i$ facing to the lower side of the image along the straight line starting from the intersection $s$, $\mathbf{p}_k$ represents a pixel located on the liner segment $\mathbf{l}_i^s$, $\hat{\theta}(\mathbf{p}_k)$ represents the gradient direction of the pixel, $\theta(\mathbf{l}_i)$ represents the direction of the straight line $\mathbf{l}_i$ (i.e., $\theta(\mathbf{l}_i) = \arctan(-\frac{a_i}{b_i})$), $T_2$ represents the angle error threshold in the step (2), # represents a counter for calculating the number of the pixels located on $\mathbf{l}_i^s$ having absolute value differences of the gradient directions and linear directions $\theta(\mathbf{l}_i)$ being smaller than the angle error threshold $T_2$, $length(\mathbf{l}_i^s)$ represents a length of the segment of the straight line $\mathbf{l}_i$ facing to the lower side of the image along the straight line starting from the intersection $s$, and the larger the $COR(\mathbf{l}_i^s)$ value in the formula (3) is, the better the consistency of the gradient directions and the located straight line directions of the pixels on the straight line segment $\mathbf{l}_i^s$ is;

(11) a road marking line or a vehicle track in a general road image faces to the lower side of the image from a remote vanishing point instead of facing to the upper side of the image, so the range of the straight line direction in the image should be [0°,180°), wherein the straight line in the 180° direction and the straight line in the 0° direction are horizontal lines, the straight line in a vertical direction should be 90°, and now considering the difference texture colors within a region enclosed by each two intersecting straight lines facing to the lower side of the image:

$$CTdiff(\mathbf{l}_i^s, \mathbf{l}_j^s) = \left\| \frac{1}{\#(\Omega_1)} \sum_{\mathbf{p}_1 \in \Omega_1} c(\mathbf{p}_1) - \frac{1}{\#(\Omega_2)} \sum_{\mathbf{p}_2 \in \Omega_2} c(\mathbf{p}_2) \right\| \quad (4)$$

The straight line $\mathbf{l}_i$ and the straight line $\mathbf{l}_j$ are intersected at the point $s$, wherein $\mathbf{l}_i^s$ and $\mathbf{l}_j^s$ respectively represent segments of the straight line $\mathbf{l}_i$ and the straight line $\mathbf{l}_j$ facing to the lower side of the image along respective straight lines, an image region between the intersecting straight lines are divided by a trunk line passing by the intersection $s$ and averaging the straight line $\mathbf{l}_i$ and the straight line $\mathbf{l}_j$ into two parts: $\Omega_1$ and $Q_2$, the formula (4) is used for calculating the difference of the texture colors of the two parts, $\#(\Omega_1)$ and $\#(Q_2)$ represent the number of the pixels in the regions $\Omega_1$ and $\Omega_2$ respectively, $\mathbf{p}_1$ and $\mathbf{p}_2$ respectively represent the pixels in the $\Omega_1$ and $\Omega_2$, $c(\mathbf{p}_1)$ and $c(\mathbf{p}_2)$ represent colors on these pixels, and the symbol $\| \ \|$ represents calculating a norm of average color difference between the regions $\Omega_1$ and $\Omega_2$;

(12) constituting an energy function of straight line segments $\mathbf{l}_i^s$ and $\mathbf{l}_j^s$ intersecting at the point $s$ according to the formula (3) and the formula (4):

$$E(\mathbf{l}_i^s, \mathbf{l}_j^s) = CTdiff(\mathbf{l}_i^s, \mathbf{l}_j^s) - COR(\mathbf{l}_i^s) - COR(\mathbf{l}_j^s) \quad (5)$$

checking the energy function of each two intersecting straight lines, the intersection having the minimum energy straight line pairs being a detected road vanishing point;
(13) the two intersecting straight lines used for detecting the road vanishing point divides the image into an initial road region (a region between the two intersecting straight lines) and an initial non-road region (the rest part beyond the initial road region in the image); and
(14) for the initial road region, calculating an average value $\boldsymbol{\mu}$ (including three numerical values RGB) of colors of the pixels located in the region and a covariance matrix $\Sigma$ of the colors, and obtaining a Gaussian distribution model of the colors of the pixels located in the region, wherein the likelihood of the pixels in the image belonging to the road region can be calculated by the following formula:

$$p(\mathbf{x} \mid \Psi_R) = (2\pi)^{-\frac{3}{2}} \mid \Sigma \mid^{-1} \exp(-\frac{1}{2}(\mathbf{x} - \mathbf{\mu})^T \Sigma^{-1}(\mathbf{x} - \mathbf{\mu})) \qquad (6)$$

wherein x represents a color value of a certain pixel, $|\Sigma|$ represents figuring out a determinant of the color covariance matrix $\Sigma$, $\Psi_R$ represents a mark belonging to the road, and $p(\mathbf{x}|\Psi_R)$ represents the likelihood of the pixel belonging to a road region; in another embodiment, first the color space of the image can be converted from RGB into an Lab color space, a neighborhood texture characteristic value of each pixel is calculated by using a sliding window, then for the initial road region, an average value (including three numerical values of Lab and a texture numerical value) of visual characteristics of the pixels in the region and a covariance matrix $\Sigma$ of the visual characteristics are calculated, at this time, x and $\mu$ in the formula (6) used for calculating the probability of each pixel belonging to the road region are 3 four-dimensional vectors, $\Sigma$ is a 4x4 matrix, and a constant coefficient $(2\pi)^{-\frac{3}{2}}$ will become $(2\pi)^{-2}$;

(15) for the initial non-road region, all pixels located in this region are initially marked as non roads, these pixels form a sample set $\Psi_N = \{\mathbf{y}_1\ \mathbf{y}_2 \cdots \mathbf{y}_m\}$, wherein $\mathbf{y}_i$ represents the color value (including three numerical values RGB, $1 \le i \le m$, $m$ represents the total number of the pixels in the initial non-road region) of the pixel, and the probability of the pixel in the image belonging to a non-road region can be obtained by a kernel density estimation operator:

$$p(\mathbf{x} \mid \Psi_N) = \frac{1}{m} \sum_{i=1}^{m} \varphi_{\mathrm{H}}(\mathbf{x} - \mathbf{y}_i) \qquad (7)$$

wherein **H** represents a symmetric positive definite matrix, $\varphi$ represents a symmetric and compact nuclear distribution function with an expected value of zero and the covariance matrix as a unit matrix, the bandwidth (or variance) value thereof can be obtained by adopting an adaptive selection method, $\Psi_N$ represents a mark belonging to non road, and $p(\mathbf{x}|\Psi_N)$ represents a likelihood of the pixel belonging to the non-road region; in another embodiment, the color space of the image can be converted from RGB into an Lab color space, a neighborhood texture characteristic value of each pixel is calculated by using a sliding window, then for the initial road region, all pixels located in this region form a sample set $\Psi N = \{\mathbf{y}_1\ \mathbf{y}_2 \cdots \mathbf{y}_m\}$, 111 }, wherein $\mathbf{y}_i$ represents a visual characteristic (including three numerical values of Lab and a texture numerical value) of the pixel, and the probability of each pixel belonging to the non-road region is calculated by the formula (7) according to the visual characteristic (including three numerical values of Lab and the texture numerical value) of each pixel by adopting a kernel density estimation method; and (16) setting a threshold $\tau_0$, and adopting a simple likelihood proportion classifier to divide the pixels in the image into a road mark and a non-road mark:

$$t = \ln(p(\mathbf{x} \mid \Psi_R)) - \ln(p(\mathbf{x} \mid \Psi_N)) \quad (8)$$

since a general likelihood adopts a logarithm mode, In in the formula (8) represents taking a natural logarithm, if a value $t$ calculated by the formula (8) is larger than the set threshold $\tau_0$, judging that the current pixel belongs to the road region and otherwise it belongs to the non-road region.

Another aspect of the present invention further provides an image-based road detection system, including a device used for receiving an input road image, a device used for dividing the image into an initial road region and an initial non-road region, a device used for determining the likelihood of each pixel in the image belonging to the road region and the likelihood belonging to the non-road region, and a device used for comparing a ratio of the likelihood of each pixel belonging to the road region to the likelihood belonging to the non-road region with a threshold to determine whether the pixel belongs to the road region.

Another aspect of the present invention further provides an image-based road detection apparatus, including a storage device and a processor. The processor can be used for executing the following operations: inputting a road image, dividing the image into an initial road region and an initial non-road region, determining the likelihood of each pixel in the image belonging to the road region and the likelihood belonging to the non-road region, and comparing a ratio of the likelihood of each pixel belonging to the road region to the likelihood belonging to the non-road region with a threshold to determine whether the pixel belongs to the road region.

The present invention further provides a navigation apparatus for a vehicle or other mobile device, and the navigation apparatus includes the image-based road detection apparatus.

The present invention further provides a computer readable storage device, the computer readable storage device includes a computer code, and the code can cause a computer to execute the following operations when being operated on the computer: inputting a road image, dividing the image into an initial road region and an initial non-road region, determining the likelihood of each pixel in the image belonging to the road region and the likelihood belonging to the non-road region, and comparing a ratio of the likelihood of each pixel belonging to the road region to the likelihood belonging to the non-road region with a threshold to determine whether the pixel belongs to the road region.

By adopting the technical solutions of the present invention, no prior knowledge on roads is necessary, no machine learning method needs to be adopted, and the method is a full automatic method capable of detecting a road from a single image from bottom to top. Although the method depends on the straight line segments to detect the road vanishing point, the initially divided road region can be corrected by statistical analysis of the visual characteristics based on the initial road division result, the method can also be applicable to road images with very large curvatures. Moreover, the method can also be used for detecting carriers in the road, and the computation complexity of the method is low, so that the method has a prospect of being promoted and applied to real-time systems.

## Brief Description of the Drawings

Fig. 1 is a flowchart of the present invention;

Fig. 2 is a schematic diagram illustrating a road detection result of the present invention based on a part of images;

Fig. 3 is a schematic diagram of a method for determining an initial road region and an initial non-road region in the present invention;

Fig. 4 is a schematic diagram of an apparatus for implementing a road detection method in the present invention;

Fig. 5 is a schematic diagram of an application system of the road detection method in the present invention.

## Detailed Description of the Embodiments

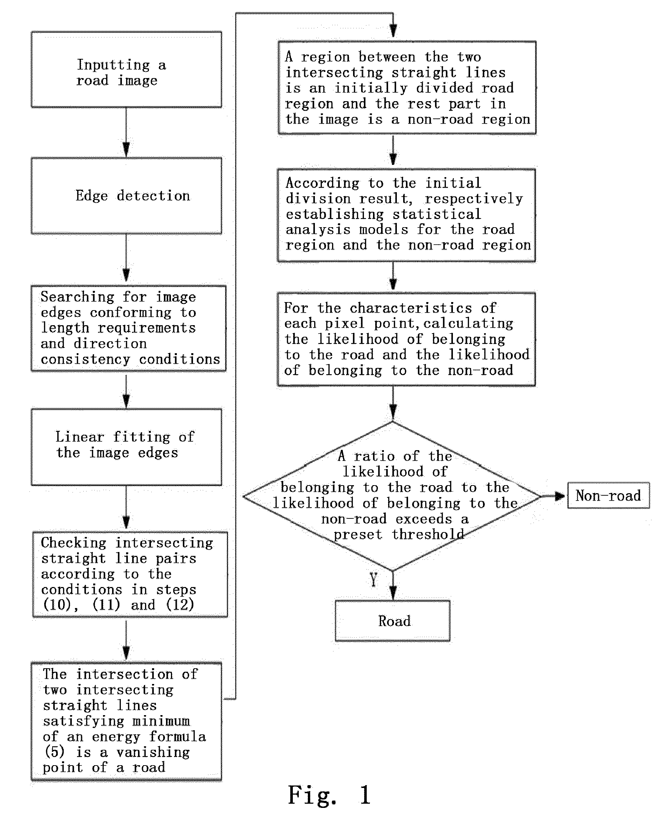

Fig. 1 is a flowchart of a method in the present invention. As shown in the figure, the operation of the method can be completed by the following steps: inputting a road image; detecting edges of the road image; determining image edges conforming to length requirements and gradient direction consistency conditions of pixels; linear fitting the determined image edges; checking the energy of intersecting straight line pairs, for example, by using the methods in the following steps (10), (11) and (12); determining an intersection of two straight lines with the minimum energy as a vanishing point of a road; then determining regions between and beyond the two intersecting straight lines as an initial road region and an initial non-road region; respectively establishing statistical analysis models for the initial road region and the initial non-road region; for the characteristics of each pixel, calculating the likelihood belonging to the road region and the likelihood belonging to the non-road region; determining a ratio of the likelihood belonging to the road region to the likelihood belonging to the non-road region, and comparing the ratio with a preset threshold; and if the ratio is larger than the preset threshold, judging that the current pixel belongs to the road region and otherwise it belongs to the non-road region.

According to a preferred embodiment of the present invention, a specific road detection operation can be implemented by the following steps:

(1) inputting a road image;

(2) setting a length threshold $T_1$, a general initial value is 1/3 of a diagonal line length of the input image, setting an angle error threshold $T_2$ of checking direction consistency in a formula (3) as 3°, and setting a number $N_1$ of image edges for linear fitting, which is about 10 in general; setting a numerical value $T_3$ of successive reduction of the length threshold, which includes 5 pixels in general; and setting a number $N_2$ of image edges satisfying direction consistency requirements, which is 5 in general;

(3) using a one-dimensional smoothing filter operator [0.037659 0.249153 0.426375 0.249153 0.037659] and a one-dimensional differential filter operator [0.109604 0.276691 0.000000 -0.276691 -0.109604] for acting on a row and a column of the image respectively, and obtaining a differential numerical value in the horizontal direction of the image; then respectively using the one-dimensional smoothing filter operator and the one-dimensional differential filter operator for acting on the column and the row of the image to obtain the differential numerical value in the vertical direction of the image; and calculating a gradient direction and an amplitude of each pixel in the image, and then using a Canny image edge detection operator to detect edge points in the image;

(4) removing isolated edge points and connection edge points in the image by using a raster scanning manner and an eight-communication method to obtain image edges, namely, if one pixel among eight adjacent pixels of one pixel has been judged as the edge point, connecting the two edge points, and otherwise using the edge point as an isolated edge point and not considering the same in the following steps;

(5) checking whether the lengths of all image edges obtained in the previous step (4) satisfy the length threshold $T_1$ preset in the step (2), if $N_1$ image edges for linear fitting and satisfying the length requirements can be collected at the current length threshold $T_1$, skipping to a next step (6), otherwise successively reducing the length threshold $T_1$ in a manner of reducing $T_3$ from the current length threshold $T_1$ at each time, until $N_1$ image edges satisfying the length requirements can be collected;

(6) for the obtained $N_1$ image edges satisfying the length requirements, calculating a measure value of gradient direction consistency of pixels on each image edge satisfying the length requirements:

$$C_i = \sum_{\mathbf{p}_k, \mathbf{p}_{k+1} \in edge\_list(i)} \left| \hat{\theta}(\mathbf{p}_k) - \hat{\theta}(\mathbf{p}_{k+1}) \right|, \qquad (1)$$

wherein $\mathbf{p}_k$ and $\mathbf{p}_{k+1}$ represent two adjacent pixels located on the i$^{th}$ image edge satisfying the length requirements, $\hat{\theta}(\mathbf{p}_k)$ and $\hat{\theta}(\mathbf{p}_{k+1})$ respectively represent the gradient directions of the two pixels, the symbol $|\ |$ represents figuring out an absolute value, and $C_i$ represents the measure value of the gradient direction consistency of the pixels on the i$^{th}$ image edge satisfying the length requirements, and the smaller the measure value is, the better the gradient direction consistency of the pixels on the edge is;

(7) according to the formula (1), arranging the $N_1$ image edges satisfying the length requirements according to the respective calculated measure values of the gradient direction consistency of the pixels from small to large, then selecting $N_2$ image edges with better direction consistency from small to large, namely, the measure values $C$ of the direction consistency thereof are smaller;

(8) for each image edge satisfying the length and direction consistency requirements obtained in the step (7), assuming that the i$^{th}$ image edge satisfying the length and direction consistency requirements have $n_i$ points in total, these points form the following homogeneous coordinate matrix $\mathbf{A}^i$:

$$\mathbf{A}^i = \begin{bmatrix} x_1^i & y_1^i & 1 \\ \vdots & \vdots & \vdots \\ x_{n_i}^i & y_{n_i}^i & 1 \end{bmatrix}, \qquad (2)$$

wherein in the formula (2), $x$ and $y$ represent space coordinates of the pixels on the i$^{th}$ image edge satisfying the length and direction consistency requirements, the superscript i represents a serial number of the image edge satisfying the length and direction consistency requirements, while a subscript represents a serial number of the pixel on the image edge, and the range is 1 to $n_i$, then these obtained matrixes $\mathbf{A}^i$ are decomposed by using a singular value decomposition, the number of these matrixes is equal to the number $N_2$ of the image edges satisfying the length and direction consistency requirements, a unit singular vector corresponding to a minimum singular value of the matrix $\mathbf{A}^i$ is a parameter vector $[a_i\ b_i\ c_i]$ of a straight line fitted by the i$^{th}$ image edge satisfying the length and direction consistency requirements, the linear equation is $a_ix+b_iy+c_i = 0$, in other words, straight lines fitted by these image edges are obtained by using a least square method;

(9) calculating intersections among these straight lines according to the parameters of the obtained straight lines, assuming that the parameter vectors of the straight lines fitted by the i$^{th}$ and the j$^{th}$ image edges are respectively $[a_i\ b_i\ c_i]$ and $\llcorner a_j\ b_j\ c_j \lrcorner$, obtaining the interaction of the straight lines fitted by the i$^{th}$ and the j$^{th}$ image edges via a cross product of the parameter vectors of the straight lines;

(10) for each two intersecting straight lines, checking the difference of the gradient direction and the located linear direction of each pixel on the two straight lines starting from the intersection of the two straight lines to the lower side of the image along the two straight lines:

$$COR(\mathbf{l}_i^s) = \frac{\#\left( \left| \hat{\theta}(\mathbf{p}_k) - \theta(\mathbf{l}_i) \right| < T_2, \mathbf{p}_k \in \mathbf{l}_i^s \right)}{length(\mathbf{l}_i^s)}, \qquad (3)$$

$s$ represents the intersection of a straight line $\mathbf{l}_i$ and a straight line $\mathbf{l}_j$, wherein $\mathbf{l}_i^s$ represents a segment of the straight line $\mathbf{l}_i$ facing to the lower side of the image along the straight line starting from the intersection $s$, $\mathbf{p}_k$ represents a

pixel located on the liner segment $\mathbf{l}_i^s$, $\hat{\theta}(\mathbf{p}_k)$ represents the gradient direction of the pixel, $\theta(\mathbf{l}_i)$ represents the direction of the straight line $\mathbf{l}_i$ (i.e., $\theta(\mathbf{l}_i) = \arctan(-\frac{a_i}{b_i})$ ), $T_2$ represents the angle error threshold in the step (2), # represents a counter, which is used for calculating the number of the pixels located on $\mathbf{l}_i^s$ having absolute value differences of the gradient directions and linear directions $\theta(\mathbf{l}_i)$ being smaller than the angle error threshold $T_2$, $length(\mathbf{l}_i^s)$ represents a length of the segment facing to the lower side of the image along the straight line starting from the intersection $s$, and the larger the $COR(\mathbf{l}_i^s)$ value in the formula (3) is, the better the consistency of the gradient directions and the located straight line directions of the pixels on the straight line segment $\mathbf{l}_i^s$ is;

(11) a road marking line or a vehicle track in a general road image faces to the lower side of the image from a remote vanishing point instead of facing to the upper side of the image, so the range of the straight line direction in the image should be [0°,180°), wherein the straight line on the 180° direction and the straight line on the 0° direction are horizontal lines, the straight line on a vertical direction should be 90°, and now considering the difference texture colors within a region enclosed by each two intersecting straight lines facing to the lower side of the image:

$$CTdiff \, (\mathbf{l}_i^s, \mathbf{l}_j^s) = \left\| \frac{1}{\#(\Omega_1)} \sum_{\mathbf{p}_1 \in \Omega_1} c(\mathbf{p}_1) - \frac{1}{\#(\Omega_2)} \sum_{\mathbf{p}_2 \in \Omega_2} c(\mathbf{p}_2) \right\| \qquad (4)$$

The straight line $\mathbf{l}_i$ and the straight line $\mathbf{l}_j$ are intersected at the point $s$, wherein $\mathbf{l}_i^s$ and $\mathbf{l}_j^s$ respectively represent segments of the straight line $\mathbf{l}_i$ and the straight line $\mathbf{l}_j$ facing to the lower side of the image along respective straight lines, an image region between the intersecting straight lines are divided by a trunk line passing by the intersection $s$ and averaging the straight line $\mathbf{l}_i$ and the straight line $\mathbf{l}_j$ into two parts: $\Omega_1$ and $\Omega_2$, the formula (4) is used for calculating the difference of the texture colors of the two parts, $\#(\Omega_1)$ and $\#(\Omega_2)$ represent the number of the pixels in the regions $\Omega_1$ and $\Omega_2$ respectively, $\mathbf{p}_1$ and $\mathbf{p}_2$ respectively represent the pixels in the $\Omega_1$ and $\Omega_2$, $c(\mathbf{p}_1)$ and $c(\mathbf{p}_2)$ represent colors on these pixels, and the symbol $\| \, \|$ represents calculating a norm of average color difference between the regions $\Omega_1$ and $\Omega_2$;

(12) constituting an energy function of straight line segments $\mathbf{l}_i^s$ and $\mathbf{l}_j^s$ intersecting at the point $s$ according to the formula (3) and the formula (4):

$$E(\mathbf{l}_i^s, \mathbf{l}_j^s) = CTdiff \, (\mathbf{l}_i^s, \mathbf{l}_j^s) - COR \, (\mathbf{l}_i^s) - COR \, (\mathbf{l}_j^s) \qquad (5)$$

checking the energy function of each two intersecting straight lines, the intersection having the minimum energy straight line pairs being a detected road vanishing point;

(13) the two intersecting straight lines used for detecting the road vanishing point divides the image into an initial road region (a region enclosed by two line segments leading from the road vanishing point to the lower side of the image) and an initial non-road region (the rest part beyond the initial road region in the image); and

(14) for the initial road region, calculating an average value $\boldsymbol{\mu}$ (including three numerical values RGB) of colors of the pixels located in the region and a covariance matrix $\Sigma$ of the colors, and obtaining a Gaussian distribution model of the colors of the pixels located in the region, wherein the likelihood of the pixels in the image belonging to the road region can be calculated by the following formula:

$$p(\mathbf{x} \,|\, \Psi_R) = (2\pi)^{-\frac{3}{2}} \,|\, \Sigma \,|^{-1} \exp(-\frac{1}{2}(\mathbf{x}-\boldsymbol{\mu})^T \Sigma^{-1}(\mathbf{x}-\boldsymbol{\mu})) \qquad (6)$$

wherein x represents a color value of a certain pixel, $|\Sigma|$ represents figuring out a determinant of the color covariance matrix $\Sigma$, $\Psi_R$ represents a mark belonging to the road, and $p(\mathbf{x}|\Psi_R)$ represents the likelihood of the pixel belonging to the road region.

In another embodiment, first the color space of the image can be converted from RGB into an Lab color space, a neighborhood texture characteristic value of each pixel is calculated by using a sliding window (the neighborhood texture characteristic value can be calculated on the basis of a local ternary template SILTP (Scale Invariant Local Ternary Pattern) with an invariable scale described on the "Modeling pixel process with scale invariant local patterns for background subtraction in complex scenes" described in the paper S. Liao, et al. published on the IEEECVPR2010 international conference, since the SLTP of each pixel calculates according to a neighborhood to obtain a string of binary numbers, and the binary numbers can be converted into a decimal numerical value according to a certain spatial sequence, so that the texture characteristics of each pixel can be expressed by a decimal numerical value). Then, for the initial road region, an average value (including three numerical values of Lab and a texture numerical value) of visual characteristics of the pixels in the region and a covariance matrix $\Sigma$ of the visual characteristics are calculated, at this time, x and $\mu$ in the formula (6) used for calculating the probability of each pixel belonging to the road region are four-dimensional vectors, $\Sigma$ is a 4*4 matrix, and a constant coefficient $(2\pi)^{-2}$ will become $(2\pi)^{-2}$.

(15) For the initial non-road region, all pixels located in this region are initially marked as non roads, these pixels form a sample set $\Psi_N = \{y_1 \, y_2 \cdots y_m\}$, wherein $y_i$ represents the color value (including three numerical values RGB, $1 \leq i \leq m$, $m$ represents the total number of the pixels in the initial non-road region) of the pixel, a simplest method of constituting a nonparametric color distribution model of the non-road region is to calculate a color histogram of the non-road region, and then occurrence frequency of the color of the pixel in the histogram is found to serve as the likelihood $p(\mathbf{x}|\Psi_N)$ of the pixel belonging to the non-road region. In another embodiment, first the color space of the image can be converted from RGB into an Lab color space, a neighborhood texture characteristic value of each pixel is calculated by using a sliding window, then for the initial road region, all pixels located in this region form a sample set $\Psi_N = \{y_1 \, y_2 \cdots y_m\}$, wherein $y_i$ represents a visual characteristic (including three numerical values of Lab and a texture numerical value) of the pixel, and a kernel density estimation method is used for constituting the nonparametric color distribution model of the non-road region according to the visual characteristic (including three numerical values of Lab and a texture numerical value) of each pixel, and a Gaussian kernel function estimation method can be used for calculating the probability of each pixel belonging to the non-road region. In addition, in the Gaussian kernel function estimation method, a variance value of the kernel function of each pixel can be adaptively selected, for example, the variance values of a group of kernel functions are given, and an optimal variance value is selected on each pixel according to the a maximum likelihood criterion;

(16) setting threshold $\tau_0 = 0.5$, and adopting a simple likelihood proportion classifier to divide the pixels in the image into a road mark and a non-road mark:

$$t = \ln(p(\mathbf{x} \mid \Psi_R)) - \ln(p(\mathbf{x} \mid \Psi_N)) \quad (7)$$

since a general likelihood adopts a logarithm mode, In in the formula (7) represents taking a natural logarithm, if a value t calculated by the formula (7) is larger than the set threshold 0.5, judging that the current pixel belongs to the road region and otherwise it belongs to the non-road region.

The foregoing description is a preferred specific embodiment of the present invention. Those skilled in the art can understand that, to achieve the object of the present invention, not all the above steps are necessary, and the sequences of the multiple steps can be flexibly exchanged. For example, length detection of the image edges and selection of the image edges according to the lengths and the consistency of the gradient directions of the pixels are not necessary steps. Specific calculation methods and parameter selection in the steps are not necessarily carried out according to the manners in the above embodiments. For example, the raster scanning manner and the eight-communication method are not necessarily applied to the removal of the isolated edge points in the image, and other conventional judgment methods can also be adopted; and the energy of the intersecting straight lines are not necessarily determined based on the difference of the colors in related regions, and can also be calculated based on other visual characteristics, for example, gray level, textures, etc. As another example, the angle error threshold $T_2$ of checking the direction consistency in the formula (3) is not necessarily set as 3°, but 2°, 4° and other values can also be adopted; the number $N_1$ of the image edges used for linear fitting is not necessarily selected as 10, but 15, 20 and other numerical values can also be selected; the numerical value $T_3$ of successive reduction of the length threshold can also be freely selected, instead of invariably selecting the 5 pixels; and the number $N_2$ of image edges satisfying direction consistency requirements can also be set as other numbers excluding 5.

By way of downloading thousands of images from the Internet, processing the images by the method of the present invention and manually labeling the road region in each image, the accuracy, detectable rate, effective road marking rate and other technical indexes of road detection of the method are measured. In these images, road conditions have great difference, urban roads with obvious pavement marks, deserts and snow roads only having vehicle tracks, highways, roads with very nark surrounding illumination or night roads, etc. By comparing the technical indexes of the method of the present invention with corresponding technical indexes of the method proposed in the paper published by Kong and et al, it can be found that the accuracy and the effective road marking rate of road detection of the method of the present invention are improved, and the result is as shown in a table 1.

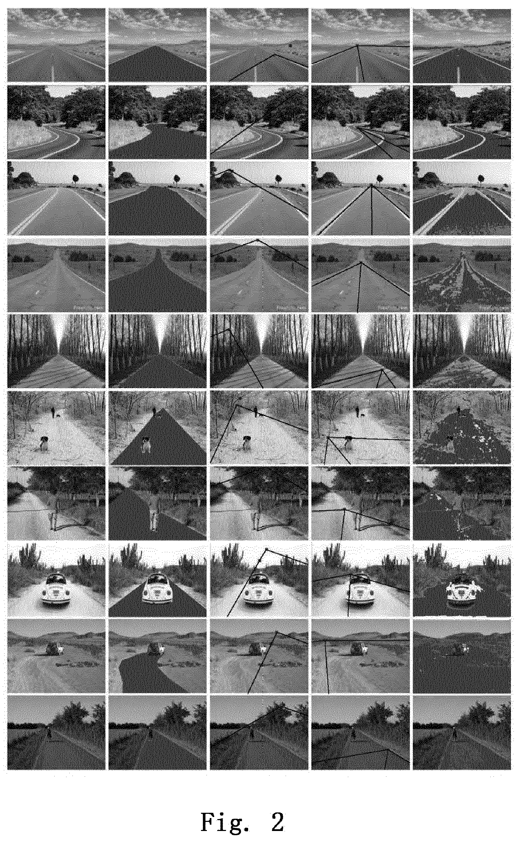

Fig. 2 schematically illustrates the above measurement method and result based on a part of images among the thousands of road images. From left to right, images located on the first column are input images. Manually marked road regions corresponding to the input images are located on the second column. Roads detected by the method introduced in the paper published by Kong and et al are located on the third column, wherein dark points are initial vanishing points obtained by the method, light points are vanishing points corrected by the method, and two line segments respectively represent two detected boundaries of the roads. Vanishing points detected by the method of the present invention are located on the fourth column, wherein an intermediate line segment is used for calculating the difference of texture colors of two parts separated by an intermediate angle line in a region enclosed by two intersecting straight lines and is a part for constituting the energy function of each two intersecting straight lines. In the figure, outer side line segments are two intersecting straight lines having the minimum energy values, so that the region between the two outer side line segments is the detected initial road region, and other parts in the figure are the non-road region; statistical models are established for the initial road region and the non-road region by adopting a Gaussian statistical distribution model and a nonparametric statistical distribution model according to the initial road region and the non-road region without depending on any external knowledge. Road detection results are located on the rightmost column.

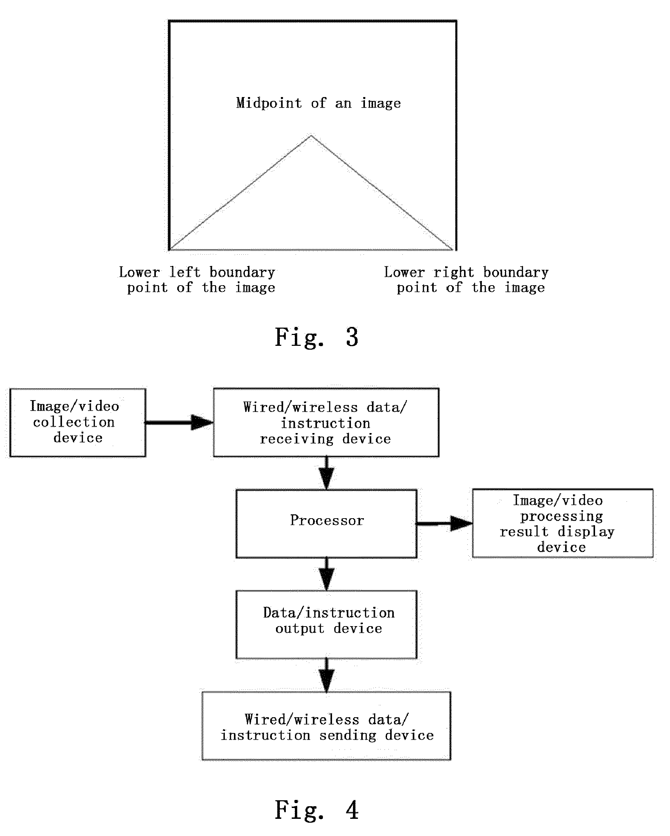

The previous example describes a method for determining the initial road region and the initial non-road region in the input image referring to the step 1 to the step 13 in the detection method embodiment as shown in Fig. 1, and the step 14 to the step 16 describe an estimation method for correcting the initial road region. The initial road region and the initial non-road region are not necessarily determined by the method as shown in Fig. 1. In another embodiment, the initial road region and the initial non-road region can be determined by basic rough estimation. For example, as shown in Fig. 3, a triangular shade region formed by a midpoint of the input image, a lower left boundary point of the image and a lower left boundary point of the image can be used as estimation of the initial road region, and other regions beyond the triangular region in the image are used as the estimation of the initial non-road region. By adopting the method, the calculation part of estimating the boundary lines of the road can be omitted, so the speed is high. The correction part of the road region can be carried out according to the step 14 to the step 16 in the specific steps.

Experimental results show that, for a particular type of road images, e.g., non-structural road images (i.e., no clear road boundary or road marking line exists in the images), by adopting this rough initial division result, the road detection result may be better than the detection result based on the vanishing points, specifically see Table 1.

Table 1 quantitative comparison of detection results of three methods

| Method | Accuracy (%) | Detectable rate (%) | Effective road marking rate (%) |
|---|---|---|---|
| Kong et al (TIP2009) | 48.445 | **71.759** | 72.973 |
| Based on vanishing point (the patent) | 50.141 | 50.372 | 83.221 |
| Based on rough initial division | **58.999** | 63.294 | **84.517** |

The foregoing method can be applied to road detection based on static images and can also be applied to road detection based on dynamic images or videos. When being applied to the road detection based on dynamic images or videos, the method includes combining time domain correlation between front and back frames of a dynamic image or video sequence, and further adopting a filtering method, for example, a kalman filtering method, to achieve road detection of the dynamic image sequence.

With regard to the aforementioned video sequence, the road region of the first frame can be estimated by the above-mentioned simple method, since the front and back frames of the video has large correlation, a subsequent frame can use the detection result of the previous frame as the estimation of the initial road region, and then the proposed likelihood proportion classifier can be used for correcting the road region to achieve a correction result changing with time.

Fig. 4 displays an apparatus executing the method of the present invention. The apparatus includes an image/video collection device, and the device can be a digital camera/camera or other similar devices to obtain road images and/or videos. The image/video collection device is connected with a processor through a receiving device. The receiving device can receive images and/or videos from the image/video collection device via wired or wireless data transmission and transmit the images and/or videos to the processor. The receiving device can also receive a command, for example, a user instruction to control or adjust the execution of the image road detection method. The processor can receive the images and/or videos from the image/video collection device and executes the road detection method under the control of a relevant instruction. After the detection, the processor can send an operation instruction based on the detection result, for example, an instruction of controlling a vehicle to operate or a robot to walk. Or, the processor only sends the detection result to a motion control system, for example, an automatic/auxiliary vehicle driving system or a robot walking control system, and the motion control system controls the motion based on the detection result. An image road detection result and/or an input image can be displayed by a display device connected to the processor.

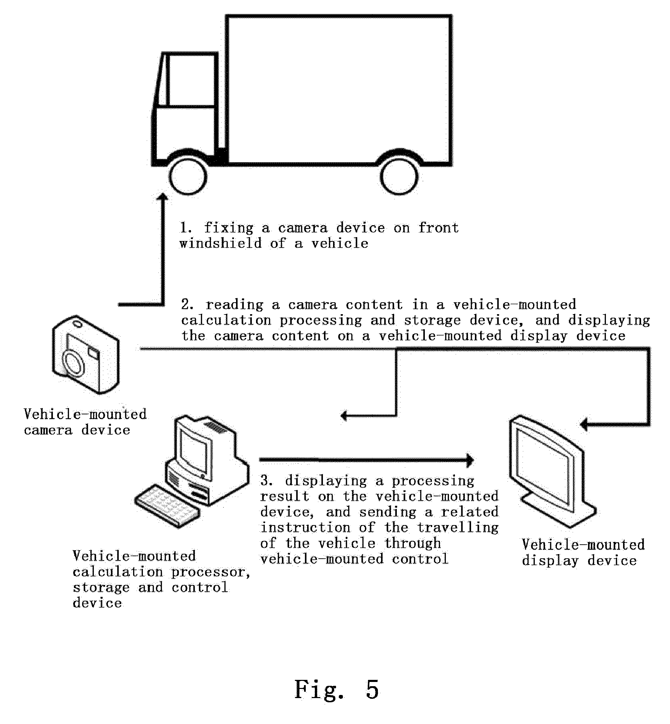

Fig. 5 is a schematic diagram of an application apparatus of the road detection method in the present invention. The method can be used for automatically detecting the road where the vehicle is located. The apparatus shown in the figure includes a vehicle-mounted camera device, and the vehicle-mounted camera device can be installed on front windshield or a nearby position of the vehicle and can photograph a forward road of the vehicle. The photographed image can be sent to a vehicle-mounted processing and storage device through wired or wireless connection and can be displayed on a vehicle-mounted displayer. The vehicle-mounted processing device can use the method to recognize roads based on the received image and send a control instruction of a vehicle control device according to a road recognition result.

The above-mentioned vehicle-mounted camera device can be installed in front of the vehicle and can also be installed behind the vehicle or at other positions to guide or control back up or other driving operations. The above-mentioned vehicle-mounted camera device can have some special camera functions, for example, a night vision function, so that the apparatus of the present invention can guide or control the driving operations in environments with poor lighting conditions.

The method of the present invention can also be used in any other trackless or driving environments excluding automatic vehicle driving. For example, the method can be applied to road recognition of walking robots, and road recognition in automatic driving of toy vehicles, and so on.

The "road" used in the present application is not limited to travelling roads of manned vehicles, but also includes other types of passages, for example, passages between shelves in supermarkets, and regions with boundaries for travelling of the toy vehicles in rooms, and so on.

Embodiments described with reference to the accompanying drawings involve flows defined by the processor by executing a computer program. Therefore, the present invention can be expanded to execute the computer program of the present invention, in particular, a computer program attached to a carrier.

This computer program can be a source code, an object code or a code interposed between the source and the object code, such as, a partially compiled code or any other codes applicable for implementing the flows defined in the present invention.

The aforementioned carrier can be any carrier capable of storing programs. For example, the carrier can includes a storage medium, including a read-only memory, such as a CD-ROM or a semiconductor read only memory, or a magnetic storage medium, such as a floppy disk or a hard disk, or optical storage medium. Further, the medium can be a non-entity medium, for example, an electric signal or an optical signal capable of being transmitted by cables or optical cables or other manners. The medium can be an integrated circuit used for writing the computer program, and the integrated circuit is made to run the aforementioned related processes. The present invention can be implemented by software and can also be implemented by hardware devices or combination of hardware and software.

**Claims**

1.  An image-based road detection method, comprising the following steps:

    inputting a road image;
    dividing the input road image into an initial road region and an initial non-road region;
    determining the likelihood of each pixel in the image belonging to a road region and the likelihood of each pixel belonging to a non-road region; and
    comparing a ratio of the likelihood of each pixel belonging to the road region to the likelihood of the pixel belonging to the non-road region with a threshold to determine whether the pixel belongs to the road region.

2.  The image-based road detection method of claim 1, wherein the dividing the input road image into an initial road region and an initial non-road region comprises:

    connecting each two of a lower left boundary point of the image, a lower right boundary point of the image and a midpoint of the image to form a triangular region, and determining the triangular region as the initial road region; and
    determining a region beyond the triangular region in the image as the initial non-road region.

3.  The image-based road detection method of claim 1, wherein the dividing the input road image into an initial road region and an initial non-road region comprises:

determining gradient directions and edge points of pixels in the road image;

connecting the edge points to obtain image edges;

determining image edges conforming to preset requirements in the obtained image edges;

for the image edges conforming to preset requirements, obtaining straight lines fitted by these image edges;

determining intersections between the obtained straight lines;

constituting an energy function of straight line pairs intersecting at the intersections, and determining the interaction of a straight line pair as a detected road vanishing point according to energy of the straight lines; and

dividing the image into the initial road region and the initial non-road region by the two straight lines determining the road vanishing point.

4. The image-based road detection method of any foregoing claim, wherein the determining the likelihood of each pixel in the image belonging to the road region and the likelihood belonging to the non-road region comprises:

determining a statistical distribution model of a specific visual characteristic of the pixel within the initial road region, and calculating the likelihood of each pixel in the image belonging to the road region according to the statistical distribution model and the specific visual characteristic on the pixel; and

determining a statistical distribution model of a specific visual characteristic of the pixel within the initial non-road region, and calculating the likelihood of each pixel in the image belonging to the non-road region according to the statistical distribution model and the specific visual characteristic on the pixel.

5. The image-based road detection method of claim 4, wherein the specific visual characteristic comprises a color characteristic.

6. The image-based road detection method of claim 5, wherein the specific visual characteristic further comprises a texture characteristic.

7. The image-based road detection method of claim 5, wherein:

the statistical distribution model of the color characteristic of the pixel within the initial road region is a Gaussian distribution model; and

the statistical distribution model of the color characteristic of the pixel within the initial non-road region is a nonparametric statistical distribution model.

8. The image-based road detection method of claim 6, wherein:

the statistical distribution model of the color characteristic and the texture characteristic of the pixel within the initial road region is a Gaussian distribution model; and

the statistical distribution model of the color characteristic and the texture characteristic of the pixel within the initial non-road region is a nonparametric statistical distribution model.

9. The image-based road detection method of any one of claims 3-8, wherein the connecting the edge points to obtain image edges comprises:

removing isolated edge points and connecting the remaining edge points in the image by adopting a raster scanning manner and an eight-communication method to obtain the image edges.

10. The image-based road detection method of any one of claims 3-9, wherein the determining image edges conforming to preset requirements in the obtained image edges comprises:

detecting whether the image edges obtained by connecting the edge points conform to preset length requirements according to a preset length threshold; and

if the number of the obtained image edges conforming to the preset length requirements is smaller than a preset number, successively reducing the length threshold according to a preset progressive decrease value, until a preset number of image edges conforming to the preset length requirements are collected.

11. The image-based road detection method of claim 10, wherein the determining image edges conforming to preset requirements in the obtained image edges comprises:

calculating a measure value of gradient direction consistency of pixels on each image edge satisfying the length requirements; and

selecting a preset number of image edges with better gradient direction consistency of pixels from the image edges conforming to the length requirements according to the obtained measure value.

12. The image-based road detection method of any one of claims 3-11, wherein the obtaining straight lines fitted by image edges for the image edges conforming to preset requirements comprises: obtaining straight lines fitted by these image edges by using a least square method.

13. The image-based road detection method of any one of claims 3-12, wherein the constituting an energy function of straight line pairs intersecting at the intersections comprises:

since a road boundary in a general road image extends from a road vanishing point towards the bottom of the image, for each two intersecting straight lines, determining the difference between the gradient direction and the located straight line direction of each pixel of the two straight lines from the intersection towards the bottom direction of the image along the two straight lines;

determining the difference of inner textures and colors of a region enclosed by each two intersecting straight lines facing to the bottom of the image; and

constituting the energy function of the straight line pairs intersecting at the intersections according to the difference of the gradient direction and the located straight line direction of each pixel on the two intersecting straight lines and the difference of inner textures and colors of the region enclosed by the two intersecting straight lines.

14. The image-based road detection method of claim 13, wherein the determining the interaction of a straight line pair as a detected road vanishing point according to energy of the straight lines comprises:

detecting the energy function of each two intersecting straight lines; and

determining the interaction of the straight lines with the minimum energy as the detected road vanishing point.

15. The image-based road detection method of any foregoing claim, wherein the input image is a dynamic image, and the method comprises: combining time domain correlation between front and back frames of a dynamic image sequence, and further adopting a filtering method to achieve road detection of the dynamic image sequence.

16. The image-based road detection method of claim 15, wherein the initial road region and the initial non-road region in a subsequent frame of image are determined based on an image detection result of an adjacent previous frame.

17. An image-based road detection apparatus, comprising:

a device used for dividing an image into an initial road region and an initial non-road region;

a device used for determining the likelihood of each pixel in the image belonging to the road region and the likelihood belonging to the non-road region; and

a device used for comparing a ratio of the likelihood of each pixel belonging to the road region to the likelihood belonging to the non-road region with a threshold to determine whether the pixel belongs to the road region.

18. An image-based road detection apparatus, comprising:

a storage device; and

a processor used for executing the method of any one of claims 1-16.

19. A navigation apparatus for a vehicle or other mobile device, comprising the image-based road detection apparatus of claim 17 or 18.

20. A computer readable storage device, comprising a computer code, which is capable of leading to execution of the method of any one of claims 1-16 when being operated on a computer.

Inputting a
road image

Edge detection

Searching for image
edges conforming to
length requirements
and direction
consistency conditions

Linear fitting of
the image edges

Checking intersecting
straight line pairs
according to the
conditions in steps
(10), (11) and (12)

The intersection of
two intersecting
straight lines
satisfying minimum
of an energy formula
(5) is a vanishing
point of a road

A region between the two
intersecting straight lines
is an initially divided road
region and the rest part in
the image is a non-road region

According to the initial
division result, respectively
establishing statistical
analysis models for the road
region and the non-road region

For the characteristics of
each pixel point, calculating
the likelihood of belonging
to the road and the likelihood
of belonging to the non-road

A ratio of the
likelihood of
belonging to the road to the
likelihood of belonging to the
non-road exceeds a
preset threshold

Non-road

Y

Road

Fig. 1

Fig. 2

Midpoint of an image

Lower left boundary
point of the image

Lower right boundary
point of the image

## Fig. 3

| Image/video collection device | → | Wired/wireless data/ instruction receiving device |

Wired/wireless data/
instruction
receiving device
↓

| Processor | → | Image/video processing result display device |

Processor
↓

Data/instruction
output device
↓

Wired/wireless data/
instruction sending device

## Fig. 4

1. fixing a camera device on front windshield of a vehicle

2. reading a camera content in a vehicle-mounted calculation processing and storage device, and displaying the camera content on a vehicle-mounted display device

Vehicle-mounted camera device

3. displaying a processing result on the vehicle-mounted device, and sending a related instruction of the travelling of the vehicle through vehicle-mounted control

Vehicle-mounted calculation processor, storage and control device

Vehicle-mounted display device

Fig. 5

# INTERNATIONAL SEARCH REPORT

International application No.

**PCT/CN2014/000842**

## A. CLASSIFICATION OF SUBJECT MATTER

G06T 7/00 (2006.01) i

According to International Patent Classification (IPC) or to both national classification and IPC

## B. FIELDS SEARCHED

Minimum documentation searched (classification system followed by classification symbols)

G06T G08G

Documentation searched other than minimum documentation to the extent that such documents are included in the fields searched

Electronic data base consulted during the international search (name of data base and, where practicable, search terms used)

WPI, EPODOC, CNPAT, CNKI, IEEE: area, probability density, distribute, edge, camera, road, image, estimate, detect, probability, Statistic, Gauss, likelihood, threshold

## C. DOCUMENTS CONSIDERED TO BE RELEVANT

| Category* | Citation of document, with indication, where appropriate, of the relevant passages | Relevant to claim No. |
|---|---|---|
| Y | CN 102227758 A (HITACHI AUTOMOTIVE SYSTEMS, LTD.), 26 October 2011 (26.10.2011), description, paragraphs [0083]-[0095], figures 1-9, and claims 1-8 | 1-20 |
| Y | CN 101599120 A (HUAZHONG UNIVERSITY OF SCIENCE AND TECHNOLOGY), 09 December 2009 (09.12.2009), description, page 3, lines 1-25, and figure 1 | 1-20 |
| Y | CN 102609938 A (ZHEJIANG UNIVERSITY), 25 July 2012 (25.07.2012), description, paragraphs [0007]-[0028] | 3, 9-14 |

☐ Further documents are listed in the continuation of Box C.        ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 15 November 2014 (15.11.2014) | **17 December 2014 (17.12.2014)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **YANG, Zhen** Telephone No.: (86-10) **62413841** |
|---|---|

Form PCT/ISA/210 (second sheet) (July 2009)

## INTERNATIONAL SEARCH REPORT
Information on patent family members

International application No.

**PCT/CN2014/000842**

| Patent Documents referred in the Report | Publication Date | Patent Family | Publication Date |
|---|---|---|---|
| CN 102227758 A | 26 October 2011 | JP 2010128949 A | 10 June 2010 |
|  |  | US 2011261168 A1 | 27 October 2011 |
|  |  | WO 2010061773 A1 | 03 June 2010 |
|  |  | US 2014118504 A1 | 01 May 2014 |
|  |  | EP 2372669 A1 | 05 October 2011 |
| CN 101599120 A | 09 December 2009 | None |  |
| CN 102609938 A | 25 July 2012 | None |  |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **H. KONG ; J.Y AUDIBERT ; J. PONCE.** General road detection from a single image. *IEEE Trans. On Image Processing,* 2010, vol. 19 (8), 2211-2220